# NEUE EUROPÄISCHE PATENTSCHRIFT

(11) **EP 0 547 502 B2**
(45) Veröffentlichungstag und Bekanntmachung des Hinweises auf die Entscheidung über den Einspruch: **10.02.1999**
(45) Hinweis auf die Patenterteilung: 14.06.1995
(21) Anmeldenummer: 92121047.2
(22) Anmeldetag: 10.12.1992
(51) Int. Cl.: C09D 163/00, C08L 63/00, C08G 59/18, C08L 67/00, C09D 167/00

(54) **Härtbares Bindemittel und Verfahren zu dessen Herstellung**
Hardenable binder and its process of manufacture
Liant durcissable et ses procédés de fabrication

(30) Priorität: 18.12.1991 DE 4141776
(43) Veröffentlichungstag der Anmeldung: 23.06.1993
(73) Patentinhaber: HOECHST AKTIENGESELLSCHAFT, 65926 Frankfurt am Main (DE)
(72) Erfinder: Neumann, Uwe, Dr., W-6208 Bad Schwalbach (DE); Hönel, Michael, Dr., W-6200 Wiesbaden (DE); Oberressl, Paul, W-6200 Wiesbaden (DE); Keller, Marion, W-6200 Wiesbaden (DE)
(74) Vertreter: Zounek, Nikolai, Dipl.-Ing.

(56) Entgegenhaltungen:
- EP-A- 0 415 879
- DE-A- 1 720 427
- DE-A- 1 938 327
- FR-A- 2 577 231
- Ullmann's Encyclopedia of Industrial Chemistry, Vol. A9, 1987, p. 559
- Ciba-Geigy Merkblatt betreffend Härter XB 3380, Publ.Nr. 28195/d

## Beschreibung

Die Erfindung betrifft ein Epoxidgruppen enthaltendes, bei erhöhter Temperatur härtbares Kunstharz, ein Verfahren zu dessen Herstellung sowie dessen Verwendung als Bindemittel für Einbrennlacke, insbesondere für Emballagenlacke und ganz besonders für Doseninnenlacke.

Es ist bekannt, daß Epoxidharze mit sauren Polyestern bei Temperaturen im Bereich von 150-200 °C zu sterilisationsfesten Lacken gehärtet werden können.

Nachteilig sind die hohen Einbrennzeiten und die gelegentliche schlechte Verträglichkeit des Polyesters mit dem Epoxidharz, die zu Oberflächenstörungen und Sterilisationsverlusten der Beschichtung führen können. Andererseits zeigt ein Einkomponenten-Einbrennsystem bei Raumtemperatur eine äußerst beschränkte Lagerstabilität, die sich in einem raschen Anstieg der Viskosität zeigt.

Es wurde nun ein härtbares Bindemittel gefunden, das aus einem Polyepoxid A und einem carboxylgruppenhaltigen Polymer B besteht, wobei die Komponente B durch Umsetzung eines carboxylfunktionellen Polyesters b1 mit unterstöchiometrischen Mengen einer Epoxidverbindung b2 erhalten wird.

Überraschenderweise hat es sich gezeigt, daß Beschichtungsmischungen, die das erfindungsgemäße Bindemittel enthalten, eine bessere Verträglichkeit der Komponenten und eine höhere Reaktivität besitzen, ohne daß die Viskosität der Mischung bei Raumtemperatur über Monate hinaus nennenswert steigt.

Die erfindungsgemäßen Bindemittel sind aufgrund ihrer hohen Reaktivität, Lagerstabilität und Löslichkeit vielseitig verwendbar. Sie sind überall dort einsatzfähig, wo von Einbrenntemperaturen oberhalb 100 °C (vorzugsweise oberhalb 140°C) Gebrauch gemacht wird, z.B. auf dem Gebiet der Lackierung, wie Grundierungen, Decklacke, Einschichtlacke, schocktrocknende Systeme für Coil-Coating und zum Lackieren von Konservendosen.

Die hohe Reaktivität der Bindemittel zeigt sich besonders, wenn in sehr kurzen Zeiten, z.B. 1 bis 3 Minuten, und bei verhältnismäßig hohen Temperaturen, z.B. 200-250°C (Objekttemperatur) eingebrannt wird.

Durch Zusatz von Katalysatoren kann in manchen Fällen die Reaktivität noch erheblich gesteigert werden. Dieses wirkt sich besonders günstig auf die notwendige Einbrennzeit, aber auch auf die erforderliche Einbrenntemperatur aus. Geeignete Katalysatoren, die z.B. in einem Anteil von 0,01 bis 5, vorzugsweise 0,05 bis 1,5 Gew.-%, bezogen auf den Gesamtfestkörpergehalt, zugegen sein können, sind u.a. Alkalisalze, basische Katalysatoren anorganischer oder organischer Natur, wie die Lithium-, Natrium- oder Kaliumsalze von schwachen organischen und anorganischen Säuren (z.B. Essig-, Benzoe-, Bor-, 2-Ethylhexan- und andere aliphatische Carbonsäuren), Titanverbindungen, Zinnverbindungen, wie Zinn-ll-octoat, Dibutylzinnoxid, Dibutylzinndichlorid und Dibutylzinndilaurat, organische Basen, wie Trialkylamine, z.B. Tributylamin, Triethanolamin, Benzyldimethylamin, cyclische Basen, wie Diazabicyclooctan, Imidazol, Aryl- und Alkylimidazole, Imidazoline, organische und anorganische Phosphorverbindungen, wie Triphenylphosphit, Phosphorsäuren, Phosphorsäure-monoester aliphatischer Alkohole, Säuren, wie p-Toluolsulfonsäure, 1,5-Naphthalindisulfonsäure, Heteropolysäuren, jeweils einzeln oder im Gemisch, z. B. Kombinationen der vorgenannten basisch reagierenden Verbindungen mit anderen der vorgenannten Katalysatoren.

Die Beschichtungen können auf einer Vielzahl von Substraten erfolgen, sofern diese den Härtungstemperaturen des Überzugs standhalten. Geeignete Substrate sind z.B.: Keramik, Holz, Glas, Beton, Kunststoffe, vorzugsweise Metalle oder Legierungen wie z.B. Eisen, Zink, Zinn, Titan, Kupfer, Aluminium, Stahl, Magnesium, Messing oder Bronze, wobei die Substrate (Metalle) alleine oder im Verbund, vorbehandelt oder nichtvorbehandelt eingesetzt werden können. Als Vorbehandlungen kommen z.B. in Betracht: geeignete thermische, mechanische oder chemische Verfahren zur Erhöhung der Haftfreudigkeit bzw. Korrosionsbeständigkeit. Die erfindungsgemäßen Bindemittel zeichnen sich aber auch durch hervorragende Haftung auf nicht vorbehandelten Metallsubstraten aus.

Die erfindungsgemäßen Bindemittel eignen sich vor allem zur Herstellung von korrosionsschützenden, chemikalienresistenten, sterilisationsfesten o. ä. Überzügen und Zwischenbeschichtungen für die verschiedensten Anwendungsgebiete, wie z.B.: Auskleiden von Gegenständen, die mit aggressiven Medien wie Treibstoffe, Lösemittel oder Lebensmittel in Berührung (auch über längere Zeit) kommen.

Ein besonders bevorzugtes Anwendungsgebiet sind Einschichtlackierungen von Blechen, die durch nachträgliches Tiefziehen, Abkanten, Profilieren, Prägen oder dergleichen in ihre Gebrauchsform gebracht werden.

Die erfindungsgemäßen Bindemittel eignen sich vor allem, bei entsprechender Wahl der Komponenten A und B, für Anwendungen, wo in dünner Schicht (0,5-20 µm, vorzugsweise 2-10 µm, und ganz besonders bevorzugt 3-8 µm), z.B. durch Tiefziehen,hervoragende Sterilisationsfestigkeiten erzielt werden müssen.

Die Bindemittel können alleine oder als Gemisch mit anderen zweckentsprechenden Bindemitteln und/oder Polymeren, bzw. Fließmitteln, Haftmitteln, Katalysatoren oder dergleichen, dem Fachmann bekannten, Additiven eingesetzt werden.

Zur Kombination geeignete Bindemittel sind OH-gruppenhaltige Amin-, Harnstoff-, Melamin-, Guanamin- , Novolak- und insbesondere Phenolharze sowie OH-gruppenhaltige Polyester bzw. Homo- und/oder Copolymerisate. Die Kombinationspartner können, bei geeigneter Wahl bis zu insgesamt 50 Gew.-%, vorzugsweise bis zu 30 Gew.-% und ganz besonders bevorzugt bis zu 10 Gew.% zugeschlagen werden.

Die Bindemittel können als Klarlack, Pulverlack und/oder unter Verwendung geeigneter (säurefester) Pigmente und Füllstoffe appliziert (Spritzen, Walzen, Tauchen) werden. Als Pigmente und Füllstoffe werden beispielsweise genannt: Titandioxid, Graphit, Ruß, Zinkchromat, Strontiumchromat, Bariumchromat, Bleichromat, Bleicyanamid, Bleisilikochromat, Calciummolybdat, Manganphosphat, Zinkoxid, Cadmiumsulfid, Chromoxid, Zinksulfid, Nickeltitangelb, Chromtitangelb, Eisenoxidschwarz, Eisenoxidrot, Ultramarinblau, Phthalocyaninkomplexe, Naphtholrot oder dergleichen. Dabei ist es überraschenderweise ohne Belang, ob die farbgebenden Pigmente anorganischer oder organischer Natur sind. Ferner sind metallische Pigmente oder solche mit metallartigem Aussehen, wie Aluminium, Aluminium-Bronzen verschiedener Farbtönung, Kupfer, Wolfram-Bronzen, Antimon- und Arsensulfidbronzen geeignet, die für die sogenannten "Metallic-Lacke" in Frage kommen. Geeignete Füllstoffe sind z. B. Talkum, Glimmer, Kaolin, Kreide, Quarzmehl, Asbestmehl, Schiefermehl, Bariumsulfat, Silikate, Glasfasern, organische Fasern oder dergleichen.

Als Beispiele für Polyepoxid A seien genannt:
die Epoxidether mehrwertiger Phenole (Resorcin, Hydrochinon, Bis-(4-hydroxyphenyl)-methan, Bis-(2-hydroxyphenyl)-methan, 4-Hydroxyphenyl-2-hydroxyphenyl-methan, Bis-(4-hydroxy-3-methylphenyl)-methan, Bis-(4-hydroxy-3,5-dibromphenyl)-methan, 2,2-Bis-(4-hydroxyphenyl)-propan, 1,1-Bis-(4-hydroxyphenyl)-cyclohexan, sowie Phenol-Formaldehyd-Kondensationsprodukte) und mehrwertiger Alkohole (Butandiole, Hexandiole, Glycerin, Pentaerythrit, Zuckeralkohole und andere). Es können auch Oligomere der oben beschriebenen Epoxidharze zum Einsatz kommen. Eine ausführliche Aufzählung geeigneter Epoxidverbindungen findet sich in dem Handbuch "Epoxidverbindungen und Epoxidharze" von A.M. Paquin, Springer Verlag, Berlin 1958, Kapitel IV und in Lee, Neville "Handbook of Epoxy Resins", 1967, Chapter 2. Besonders bevorzugt sind Epoxidharze auf Basis 2,2-Bis-(4-hydroxyphenyl)-propan (Bisphenol A) mit einem durchschnittlichen Molekulargewicht von 340-8000. Die vorstehenden Polyepoxide können einzeln oder im Gemisch eingesetzt werden. Gegebenenfalls können sie auch in Gemischen mit Monoepoxiden eingesetzt werden.

Zur Darstellung des carboxylgruppenhaltigen Polymers (B) erfolgt der erste Reaktionsschritt in schon bekannter Weise durch Kondensation in der Schmelze oder durch azeotrope Destillation mit geeigneten Schleppmitteln. Die Polyester b1 werden aus den freien Säuren oder deren Anhydriden und Alkoholen unter Verwendung von Katalysatoren bei Temperaturen von 140-230°C hergestellt. Verwendung finden dabei aromatische, aliphatische oder cycloaliphatische Carbonsäuren.

Bevorzugte aromatische Polycarbonsäuren sind Derivate des Benzols und/oder des Naphthalins und/oder des Benzophenons, wie Terephthalsäure, Isophthalsäure, Phthalsäure, Trimesinsäure, Trimellithsäure, Benzol-1,2,3-tricarbonsäure, Pyromellithsäure, Naphthalin-1,4-dicarbonsäure, Naphthalin-2,6-dicarbonsäure, Naphthalin-1,8-dicarbonsäure, Naphthalin-1,4,5,8-tetracarbonsäure, Benzophenon-4,4'-dicarbonsäure, Benzophenon-3,3'-dicarbonsäure oder Benzophenon-3,3',4,4'-tetracarbonsäure, bzw. soweit verfügbar, deren Anhydride.

Bevorzugte aliphatische Polycarbonsäuren sind Bernsteinsäure, Dodecenylbernsteinsäure, Adipinsäure, 2,2,4-Trimethyladipinsäure, 2,4,4-Trimethyladipinsäure, Glutarsäure, Butan-1,2,3,4-tetracarbonsäure, Zitronensäure, Pimelinsäure, Korksäure, Azelainsäure, Suberinsäure, Dodecandisäure oder sogenannte Dimere Fettsäuren.

Bevorzugte cycloaliphatische Polycarbonsäuren sind Hexahydrophthalsäure, Hexahydroisophthalsäure, Hexahydroterephthalsäure, Tetrahydrophthalsäure, Bicyclo[2.2.1]hept-5-en-2,3-dicarbonsäure, Tetrahydrofuran-2,3,4,5-tetracarbonsäure, Cyclopentan-1,2,3,4-tetracarbonsäure oder Methylhexahydrophthalsäure, bzw. soweit verfügbar, deren Anhydride.

Die vorstehenden polyfunktionellen Carbonsäuren können einzeln oder im Gemisch eingesetzt werden. Gegebenenfalls können sie auch in Gemischen mit Monocarbonsäuren eingesetzt werden.

An Alkoholen für die Synthese der Polyester seien genannt: Polyhydroxyverbindungen wie zum Beispiel Ethan-1,2-diol, Propan-1,2-diol, Propan-1,3-diol, 2,2-Dimethylpropan-1,3-diol, 2-Ethyl-2-methyl-propan-1,3-diol, Butan-1,4-diol, Hexan-1,6-diol, Dodecan-1,12-diol, Bis-(4-hydroxycyclohexyl)-methan, 2,2-Bis-(4-(2-hydroxy-ethoxy)-phenyl)-propan, 3(4),8(9)-Bis-(hydroxymethyl)-tricyclo[5.2.1.0^{2,6}]-decan, 1,1,1-Trimethylol-ethan, 1,1,1-Trimethylol-propan, Pentaerythrit, Dipentaerythrit, Bis-(2,2-bis-(hydroxymethyl)-butyl)-ether, 1,4-Bis-(hydroxymethyl)-cyclohexan, 2,2-Bis-(hydroxymethyl)-propionsäure, Glycerin, Diglycerin gegebenenfalls zusammen mit einwertigen Alkoholen wie Butanol, Octanol, Laurylalkohol, ethoxylierten oder propoxylierten Phenolen oder Alkylphenolen bzw. Fettalkoholen, jeweils einzeln oder im Gemisch.

Der Polyester b1 hat eine Säurezahl von 40 - 800, vorzugsweise 80 - 650.
In einem zweiten Reaktionsschritt wird der Polyester b1 in einem Lösungsmittel oder in der Schmelze im stöchiometrischen Unterschuß mit einer Epoxidverbindung b2 umgesetzt. Das Verhältnis Säuregruppen zu Epoxidgruppen beträgt 100:1 bis 1,1:1, vorzugsweise 40:1 bis 2:1, ganz besonders bevorzugt 30:1 bis 10:1.

Bevorzugte Epoxide b2 für die Umsetzung mit dem Polyester b1 sind vorwiegend Epoxidverbindungen mit mehr als einer Epoxidgruppe pro Molekül. Im wesentlichen können die gleichen Epoxidverbindungen wie unter (A) genannt zur Verwendung kommen.Besonders bevorzugt sind Epoxidharze auf Basis 2,2-Bis(4-hydroxyphenyl)-propan (Bisphenol A) mit einem durchschnittlichen Molekulargewicht von 340 - 8000. Die vorstehenden polyfunktionellen Epoxide können einzeln oder im Gemisch eingesetzt werden. Gegebenenfalls können sie auch in Gemischen mit Monoepoxiden eingesetzt werden.

Als Lösungsmittel verwendet man aprotische, polare Lösemittel wie zum Beispiel Ketone: Butanon, 4-Methyl-pentan-2-on, Isophoron, 3,3,5-Trimethyl-cyclohexanon, 2,6-Dimethyl-heptan-4-on, 2,4-Dimethyl-pentan-3-on, 2-Methoxy-2-methyl-pentan-4-on oder Ether: 1,2-Dimethoxy-ethan, Diethylenglykoldimethylether, Dipropylenglykoldimethylether, Propylenglykoldibutylether, oder Ester: Pivalinsäureethylester, 1-Ethoxy-propyl-2-acetat, 1-Methoxy-propyl-2-acetat, 3-Ethoxypropionsäureethylester oder 1,2-Propylendiacetat. Es kommen auch Gemische der oben erwähnten Lösemittel zum Einsatz.

Als Katalysatoren können die für das Einbrennen oben beschriebenen zum Einsatz kommen.

Das Polyepoxid A und das carboxylgruppenhaltige Polymer B werden bei 50°C-120°C im Verhältnis 95:5 bis 40:60, bevorzugt 15:1 bis 3:1, (bezogen auf Festharz) homogen vermischt.
Danach ist das Bindemittel gebrauchsfähig.

### Beispiele:

### Beispiel (1)

### Komponente A:

Beckopox EP 304 (Hoechst AG) mit einem EV (Epoxidäquivalentgewicht) von 915, wird in 1-Ethoxypropyl-acetat im Verhältnis 1:1 gelöst.

### Komponente B:

338 g 1,2,3,4-Butantetracarbonsäure-bisanhydrid (1,71 mol), und 316 g 2,2-Bis-(4-(2-hydroxyethoxy)-phenyl)-propan (1,00 mol) werden in der Schmelze verestert. Nach fünf Stunden findet man folgende Säurezahlen: alkoholisch: 130 wäßrig: 415. Der Polyester wird mit soviel Bis-(methoxyethyl)ether aufgenommen, daß eine 80%ige Lösung entsteht, und anschließend mit 9,1 g Genapol T-080 (Fettalkohol, Basis C16-C18 mit durchschnittlich acht Molen Ethylenoxid umgesetzt, Hoechst AG) und der stöchiometrischen Menge Wasser versetzt, um die restlichen Anhydridringe zu spalten. Sodann erfolgt bei 80°C die Zugabe von 601 g eines Epoxidharzes auf Basis Bisphenol A mit einem EV 1200. Bei dieser Temperatur wird gehalten, bis das EV 20.000 überschritten hat. Anschließend wird mit 1-Ethoxy-propyl-acetat auf 50% Festkörpergehalt verdünnt.

Die Lösungen der Komponenten A und B werden schließlich im Verhältnis 5,2:1,0 gemischt.

### Beispiel (2)

### Komponente A:

Beckopox EP 307 (Hoechst AG), mit einem EV (Epoxidäquivalentgewicht) von 1730, wird in 3-Ethoxypropionsäureethylester im Verhältnis 1:1 gelöst.

### Komponente B:

351 g Trimellithsäureanhydrid (1,83 mol) und 76 g Propylenglykol (1,00 mol) werden mit Xylol azeotrop verestert. Nach neun Stunden findet man folgende Säurezahlen: alkoholisch: 231 wäßrig: 460. Der Polyester wird mit soviel 4-Methoxy-4-methyl-pentan-2-on aufgenommen, daß eine 75%ige Lösung entsteht, und anschließend mit 5,9 g Genapol T-050 (Fettalkohol, Basis C16-C18, mit durchschnittlich fünf Molen Ethylenoxid umgesetzt, Hoechst AG) und der stöchiometrischen Menge Wasser versetzt, um die restlichen Anhydridringe zu spalten. Sodann erfolgt bei 80°C die Zugabe von 427 g eines Epoxidharzes auf Basis Bisphenol A mit einem EV 1600. Bei dieser Temperatur wird gehalten, bis das EV 20.000 überschritten hat. Anschließend wird mit 3-Ethoxy-propionsäure-ethylester auf 50% Festkörpergehalt verdünnt. Die Lösungen der Komponenten A und B werden schließlich im Verhältnis 4,2:1,0 gemischt.

### Beispiel (3)

### Komponente A:

Epikote 1008 (Shell AG), mit einem EV (Epoxidäquivalentgewicht) von 2515, wird in 2-Ethoxy-ethylacetat im Verhältnis 1:1 gelöst.

### Komponente B:

373 g Trimellithsäureanhydrid (1,94 mol) und 62 g Ethylenglykol (1,00 mol) werden mit Xylol azeotrop verestert. Nach neun Stunden findet man folgende Säurezahlen: alkoholisch: 243 wäßrig: 495. Der Polyester wird mit soviel Bis-(methoxyethyl)-ether aufgenommen, daß eine 75%ige Lösung entsteht, anschließend mit 6,1 g Arcopal N 090 (Nonylphenol, mit durchschnittlich neun Molen Ethylenoxid umgesetzt, Hoechst AG) und der stöchiometrischen Menge Wasser versetzt, um die restlichen Anhydridringe zu spalten. Sodann erfolgt bei 80°C die Zugabe von 435 g eines Epoxidharzes auf Basis Bisphenol A mit einem EV 1600. Bei dieser Temperatur wird gehalten, bis das EV 20.000 überschritten hat. Anschließend wird mit 2-Ethoxyethyl-acetat auf 50% Festkörpergehalt verdünnt.
Die Lösungen der Komponenten A und B werden schließlich im Verhältnis 4,2:1,0 gemischt.

### Beispiel (4)

### Komponente A:

Ein Epoxidharz, hergestellt aus 0,83 val Beckopox EP 140, 0,17 val 1,6-Hexandioldiglycidylether und 0,91 val Bisphenol A nach bekanntem Verfahren, mit einem EV (Epoxidäquivalentgewicht) von 3200 wird in 3-Methoxy-butyl-acetat im Verhältnis 45:55 gelöst.

### Komponente B:

393 g 1,2,3,4-Cyclopentantetracarbonsäure-bisanhydrid (1,87 mol) und 316 g 2,2-Bis-(4-(2-hydroxyethoxy)-phenyl)-propan (1,00 mol) werden in der Schmelze verestert. Nach fünf Stunden findet man folgende Säurezahlen: alkoholisch: 148 wäßrig: 435. Der Polyester wird mit soviel 4-Methyl-pentan-2-on aufgenommen, daß eine 80 %ige Lösung entsteht, anschließend mit 9,8 g Sapogenat T-080 (Tris-tert.-butylphenol, mit durchschnittlich acht Molen Ethylenoxid umgesetzt, Hoechst AG) und der stöchiometrischen Menge Wasser versetzt, um die restlichen Anhydridringe zu spalten. Sodann erfolgt bei 80°C die Zugabe von 709 g eines Epoxidharzes auf Basis Bisphenol A mit einem EV 1200. Bei dieser Temperatur wird gehalten, bis das EV 20.000 überschritten hat. Anschließend wird mit 3-Methoxy-butyl-acetat auf 45% Festkörpergehalt verdünnt.
Die Lösungen der Komponenten A und B werden schließlich im Verhältnis 5,7:1,0 gemischt.

### Beispiel (5)

### Komponente A:

Epikote 1008 (Shell AG), mit einem EV (Epoxidäquivalentgewicht) von 2650, wird in 3-Methoxy-butylacetat im Verhältnis 45:55 gelöst.

### Komponente B:

464 g Tetrahydrophthalsäureanhydrid (3,05 mol) und 134 g 1,1,1-Trimethylolpropan (1,00 mol) werden in der Schmelze verestert. Nach fünf Stunden findet man folgende Säurezahlen: alkoholisch: 286 wäßrig: 291. Der Polyester wird mit soviel 4-Methyl-pentan-2-on aufgenommen, daß eine 80 %ige Lösung entsteht und anschließend mit 6,1 g Arcopal N 090 (Nonylphenol, mit durchschnittlich neun Molen Ethylenoxid umgesetzt, Hoechst AG) versetzt. Sodann erfolgt bei 80°C die Zugabe von 183 g Beckopox EP 140. Bei dieser Temperatur wird gehalten, bis das EV 20.000 überschritten hat. Anschließend wird mit 3-Methoxybutyl-acetat auf 45% Festkörpergehalt verdünnt.
Die Lösungen der Komponenten A und B werden schließlich im Verhältnis 5,7:1,0 gemischt.

### Anwendungstechnische Ausprüfung

Mit den oben genannten Bindemitteln wird ein Weißlack gefertigt und in 5-6 µm Stärke auf Weißblech 12 min bei 190°C eingebrannt. Der Weißlack setzt sich wie folgt zusammen (Teile = Gew.-Teile): 100 Teile Bindemittel
50 Teile Titandioxid CL 23-10 (Kronos)
40 Teile Ethoxypropylacetat
0,5 Teile Phosphorsäure 40%ig
Das Vergleichsbeispiel (V) beruht auf einem dem Stand der Technik entsprechenden Bindemittelsystem. Es besteht aus einem Härter der Firma Ciba (XB 3380, 15 Teile) und einem Epoxidharz der Shell AG (Epikote 1007, 85 Teile) in 40%iger Lösung Ethoxyethanol.

| Bindemittel aus Beispiel | 1 | 2 | 3 | 4 | 5 | V |
|---|---|---|---|---|---|---|
| Glanz (%) 60°-Winkel(a) | 95 | 96 | 94 | 90 | 94 | 60 |
| Haftung (Gitterschnitt) (b) | 0 | 0 | 0-1 | 0-1 | 0-1 | 0 |
| Schlagtiefung (inchpound) (c) | > 40 | > 40 | > 40 | > 40 | > 40 | > 40 |
| Aceton-Test (Doppelwischungen) | > 100 | > 100 | > 100 | > 100 | > 100 | 10 |
| Sterilisationsfestigkeit (d) | i.O. | i.O. | i.O. | i.O. | i.O | Blasenbildung |

| | | | | | | |
|---|---|---|---|---|---|---|
| (a) nach Lange | | | | | | |
| (b) DIN 53 151 | | | | | | |
| (c) DIN 55 669 | | | | | | |
| (d) in 2%iger Milchsäure, 1 h bei 129°C (= 1,5 bar) | | | | | | |

## Patentansprüche

1. Härtbares Bindemittel bestehend aus einem Polyepoxid **A** und einem carboxylgruppenhaltigen Polymer **B** wobei das carboxylgruppenhaltige Polymer **B** erhalten wird durch Umsetzung eines carboxylfunktionellen Polyesters **b1** mit einer Epoxidverbindung **b2** in solchen Mengen, daß das Verhältnis der Säuregruppen zu den Epoxidgruppen 100:1 bis 1,1:1 beträgt.

2. Härtbares Bindemittel nach Anspruch 1, dadurch gekennzeichnet, daß die Komponente A aus mindestens einem Vertreter der Gruppen:
1. Epoxidether mehrwertiger Alkohole oder Phenole,
2. Oligomere oder Polymere von Vertetern der Gruppe 1,
3. Mischungen von mindestens einem Vertreter aus 1 und/oder 2 und einem Monoepoxid,
besteht.

3. Härtbares Bindemittel nach mindestens einem der vorhergehenden Ansprüche, dadurch gekennzeichnet, daß der carboxylfunktionelle Polyester (b1) das Kondensationsprodukt von mindestens einer Polycarbonsäure aus den Gruppen:
a) aromatische Polycarbonsäuren,
b) aliphatische Polycarbonsäuren,
c) cycloaliphatische Polycarbonsäuren
d) Mischungen aus mindestens einer Polycarbonsäure der Gruppen a-c mit mindestens einer Monocarbonsäure,
mit mindestens einer Polyhydroxyverbindung oder mit einer Mischung aus mindestens einer Polyhydroxy- und mindestens einer Monohydroxyverbindung darstellt.

4. Härtbares Bindemittel nach mindestens einem der vorhergehenden Ansprüche, dadurch gekennzeichnet, daß der carboxylfunktionelle Polyester (b1) eine Säurezahl von 40 - 800, vorzugsweise von 80 - 650, besitzt.

5. Härtbares Bindemittel nach mindestens einem der vorhergehenden Ansprüche, dadurch gekennzeichnet, daß zur Darstellung von b1 Fettalkohole, Alkylphenole, ethoxylierte oder propoxylierte Phenole als Monohydroxyverbindung verwendet werden.

6. Härtbares Bindemittel nach mindestens einem der vorhergehenden Ansprüche, dadurch gekennzeichnet, daß die Verbindung b2 ein Epoxidharz auf Basis von Bisphenol A, Bisphenol F, 1,6-Hexandiol, 1,4-Butandiol allein oder im Gemisch und Epichlorydin mit einem durchschnittlichen Molgewicht von 340 - 8000 darstellt.

7. Härtbares Bindemittel nach mindestens einem der vorhergehenden Ansprüche, dadurch gekennzeichnet, daß die Komponenten b1 und b2 im Verhältnis 40:1 bis 2:1 und bevorzugt 30:1 bis 10:1, (Verhältnis bezogen auf Säuregruppen zu Epoxidgruppen) eingesetzt werden.

8. Härtbares Bindemittel nach mindestens einem der vorhergehenden Ansprüche, dadurch gekennzeichnet, daß es 0,01 - 5 Gew.-% (bezogen auf den Gesamtfestkörpergehalt) mindestens eines Katalysators enthält.

9. Härtbares Bindemittel nach mindestens einem der vorhergehenden Ansprüche, dadurch gekennzeichnet, daß es zusätztich bis zu 50 Gew.-% eines anderen Bindemittels enthält.

10. Verfahren zur Darstellung eines härtbaren Bindemittels nach mindestens einem er vorhergehenden Ansprüche, dadurch gekennzeichnet, daß ein saurer Polyester b1, gegebenenfalls in Gegenwart eines polaren, aprotischen Lösungsmittels, mit einer unterstöchiometrischen Menge einer Epoxidverbindung b2 umgesetzt wird, das Reaktionsprodukt B bei 50 - 120 °C mit einem Polyepoxid A vermischt wird und gegebenenfalls weitere handelsübliche Zusätze beigefügt werden.

11. Verwendung von härtbaren Bindemitteln nach mindestens einem der Ansprüche 1 - 9 in Einbrennlakken.

12. Verwendung nach Anspruch 11 in Einbrennlacken für Beschichtungen im Bereich der Lebensmitteltechnologie.

## Claims

1. A curable binder composed of a polyepoxide **A** and a carboxyl group-containing polymer **B**, the carboxyl group-containing polymer **B** being obtained by reacting a carboxy-functional polyester **b1** with an epoxy compound **b2** in amounts such that the ratio of the acid groups to the epoxy groups is 100:1 to 1.1:1.

2. The curable binder as claimed in claim 1, wherein the component A is composed of at least one representative from the groups comprising:
1. epoxide ethers of polyhydric alcohols or phenols,
2. oligomers or polymers of representatives of group 1 and
3. mixtures of at least one representative from 1 and/or 2 and a monoepoxide.

3. The curable binder as claimed in at least one of the preceding claims, wherein the carboxy-functional polyester (b1) is the condensation product of at least one polycarboxylic acid from the groups comprising:
a) aromatic polycarboxylic acids,
b) aliphatic polycarboxylic acids,
c) cycloaliphatic polycarboxylic acids, and
d) mixtures of at least one polycarboxylic acid from groups a-c with at least one monocarboxylic acid,
with at least one polyhydroxy compound or with a mixture of at least one polyhydroxy compound and at least one monohydroxy compound.

4. The curable binder as claimed in at least one of the preceding claims, wherein the carboxy-functional polyester (bl) has an acid number of 40-800, preferably of 80-650.

5. The curable binder as claimed in at least one of the preceding claims, wherein the monohydroxy compounds used to prepare bl are fatty alcohols, alkylphenols or ethoxylated or propoxylated phenols.

6. The curable binder as claimed in at least one of the preceding claims, wherein the compound b2 is an epoxy resin based on bisphenol A, bisphenol F, 1,6-hexanediol or 1,4-butanediol, on their own or as a mixture, and epichlorohydrin having an average molecular weight of 340-8000.

7. The curable binder as claimed in at least one of the preceding claims, wherein the components bl and b2 are used in a ratio of 40:1 to 2:1 and preferably 30:1 to 10:1 (ratio based on acid groups relative to epoxy groups).

8. The curable binder as claimed in at least one of the preceding claims, which contains 0.01-5% by weight (with respect to the total solids content) of at least one catalyst.

9. The curable binder as claimed in at least one of the preceding claims, which additionally contains up to 50% by weight of another binder.

10. A process for the preparation of a curable binder as claimed in at least one of the preceding claims, wherein an acid polyester b1 is reacted, optionally in the presence of a polar, aprotic solvent, with a substoichiometric amount of an epoxy compound b2, the reaction product B is mixed at 50-120°C with a polyepoxide A and further commercially available additives are optionally added.

11. The use of curable binders as claimed in at least one of claims 1-9 in stoving paints.

12. The use as claimed in claim 11 in stoving paints for coatings in the foodstuffs technology sector.

## Revendications

1. Agent liant durcissable constitué d'un polyépoxyde A et d'un polymère B contenant des groupes carboxyle, le polymère B contenant des groupes carboxyle étant obtenu par réaction d'un polyester bl à fonctionnalité carboxyle avec un composé époxyde b2 dans des quantités telles, que le rapport des groupes acide aux groupes époxyde est de 100:1 à 1,1:1.

2. Agent liant durcissable selon la revendication 1, caractérisé en ce que le composant A est constitué en au moins un représentant des groupes :
1 - des époxyéthers de phénols ou d'alcools multifonctionnels,
2 - des oligomères ou polymères des représentants du groupe 1,
3 - des mélanges d'au moins un représentant de 1 et/ou 2 et d'un monoépoxyde.

3. Agent liant durcissable selon au moins une des revendications précédentes, caractérisé en ce que le polyester (bl) à fonctionnalité carboxyle représente le produit de condensation d'au moins un acide polycarboxylique du groupe :
a) des acides polycarboxyliques aromatiques,
b) des acides polycarboxaliques aliphatiques,
c) des acides polycarboxaliques cycloaliphatiques,
d) des mélanges d'au moins un acide polycarboxylique des groupes a-c avec au moins un acide monocarboxylique,
avec au moins un composé polyhydroxylé ou avec un mélange d'au moins un composé polyhydroxylé et d'au moins un composé monohydroxylé.

4. Agent liant durcissable selon au moins une des revendications précédentes, caractérisé en ce que le polyester (b1) à fonctionnalité carboxyle présente un indice d'acide compris entre 40 et 800, de préférence entre 80 et 650.

5. Agent liant durcissable selon au moins une des revendications précédentes, caractérisé en ce que l'on utilise pour la préparation de b1, en tant que composés monohydroxylés, des alcools gras, des alkylphénols, des phénols éthoxylés ou propoxylés.

6. Agent liant durcissable selon au moins une des revendications précédentes, caractérisé en ce que le composé b2 représente une résine époxy à base de bisphénol A, de bisphénol F, de 1,6-hexanediol, de 1,4-butanediol, seule ou en mélange et d'épichlorhydrine avec un masse molaire moyenne comprisse entre 340 et 8 000.

7. Agent liant durcissable selon au moins une des revendications précédentes, caractérisé en ce que l'on utilise les composants b1 et b2 dans un rapport de 40:1 à 2:1 et, de préférence, de 30:1 à 10:1, (rapport des groupes acide aux groupes époxyde).

8. Agent liant durcissable selon au moins une des revendications précédentes, caractérisé en ce que il contient entre 0,01 et 5 % en poids (par rapport à la teneur totale en extrait sec) d'au moins un catalyseur.

9. Agent liant durcissable selon au moins une des revendications précédentes, caractérisé en ce qu'il contient en plus jusqu'à 50 % en poids d'un autre agent liant.

10. Procédé de préparation d'un agent liant durcissable selon au moins une des revendications précédentes, caractérisé en ce que l'on fait réagir un polyester acide b1, éventuellement en présence d'un solvant aprotique polaire, avec un défaut stoechiométrique d'un composé époxyde b2, on mélange le produit de réaction B avec un polyépoxyde A à une température comprise entre 50 et 120°C et on ajoute éventuellement d'autres additifs disponibles dans le commerce.

11. Utilisation d'agents liants durcissables selon au moins l'une des revendications 1 à 9 dans des vernis à cuire.

12. Utilisation selon la revendication 11 dans des vernis à cuire pour des revêtements dans le domaine des technologies des produits alimentaires.
